# EUROPÄISCHE PATENTSCHRIFT

(11) **EP 2 830 466 B1**
(45) Veröffentlichungstag und Bekanntmachung des Hinweises auf die Patenterteilung: **06.09.2017**
(21) Anmeldenummer: 13713808.7
(22) Anmeldetag: 21.03.2013
(51) Int. Cl.: A47J 31/36

(54) **BRÜHVORRICHTUNG ZUM EXTRAHIEREN EINER PORTIONSKAPSEL**
BREWING APPARATUS FOR BREWING BY EXTRACTION FROM A PORTION CAPSULE
DISPOSITIF D'INFUSION POUR L'INFUSION D'UNE CAPSULE DE DOSAGE

(30) Priorität: 30.03.2012 DE 102012006414
(43) Veröffentlichungstag der Anmeldung: 04.02.2015
(73) Patentinhaber: Eugster/Frismag AG Elektrohaushaltgeräte, 8580 Amriswil (CH)
(72) Erfinder: SONDEREGGER, Remo, CH-8274 Tägerwilen (CH); FISCHER, Daniel, CH-8590 Romanshorn (CH)
(74) Vertreter: Loock, Jan Pieter
(86) Internationale Anmeldenummer: PCT/EP2013/055990
(87) Internationale Veröffentlichungsnummer: WO 2013/143974

(56) Entgegenhaltungen:
- EP-A1- 1 502 529
- EP-A1- 2 077 087
- EP-B1- 2 229 082
- WO-A1-95/17121
- DE-A1-102010 044 945
- DE-A1-102011 011 204
- DE-T2-602004 007 524

## Beschreibung

### Stand der Technik

Die vorliegende Erfindung betrifft eine Brühvorrichtung zum Extrahieren einer Portionskapsel mit einem ersten Brühkammerelement und einem zweiten Brühkammerelement, wobei das erste Brühkammerelement zwischen einer Ladestellung, in welcher das erste und das zweite Brühkammerelement voneinander beabstandet sind, und einer Extraktionsstellung, in welcher das erste und das zweite Brühkammerelement zur Bildung einer im Wesentlichen geschlossenen Brühkammer einander angenähert sind, bewegbar ist.

Solche Brühvorrichtungen sind allgemein bekannt. Beispielsweise ist aus der Druckschrift EP 2 077 087 A1 eine Brühvorrichtung für eine Portionskapsel bekannt, welche ein zweites Brühkammerelement in Form eines Aufnahmeelements mit einem Hohlraum zur Aufnahme der Portionskapsel und ein erstes Brühkammerelement in Form eines Verschlusselements zum Verschließen des Hohlraums umfasst. Das Verschlusselement umfasst dabei eine Injektionsanordnung zum Einleiten von Extraktionsflüssigkeit in die Portionskapsel, während das Aufnahmeelement eine Extraktionsanordnung umfasst, um die mit einer in der Portionskapsel angeordneten Getränkesubstanz wechselwirkende Extraktionsflüssigkeit aus der Portionskapsel abzuführen und zur Bereitstellung eines Getränks einem Trinkgefäß zuzuführen. Zur Befüllung der Brühvorrichtung mit der Portionskapsel wird das Verschlusselement in eine Ladestellung überführt, in der es von dem Aufnahmeelement beabstandet ist. Anschließend wird die Portionskapsel in einen Zwischenraum zwischen dem Aufnahmeelement und dem Verschlusselement eingeführt und daraufhin das Verschlusselement in Richtung des Aufnahmeelements entlang einer axialen Richtung verschoben, wodurch die Portionskapsel in den Hohlraum des Aufnahmeelements eingeführt wird. Das Aufnahmeelement und das Verschlusselement bilden in der Extraktionsstellung eine im Wesentlichen geschlossene Brühkammer zur Extraktion der Portionskapsel. Die Getränkesubstanz umfasst insbesondere zu extrahierenden Röst- oder Instant-Kaffee. Ferner ist bekannt, derartige Brühvorrichtungen mit Perforationsmitteln auszustatten, welche die Portionskapsel zum Einleiten der Extraktionsflüssigkeit oder zum Ableiten des Getränkeextrakts während oder nach dem Schließen der Brühkammer perforieren.

Nachteiligerweise besteht an solchen Brühvorrichtungen die Gefahr, dass die Portionskapsel beim Überführen des ersten Brühkammerelements von der Ladestellung in Richtung der Extraktionsstellung am zweiten Brühkammerelement anstößt und sich nicht in die Aufnahme einführen lässt. Ein Schließen der Brühkammer wird in diesem Fall blockiert und eine ordnungsgemäße Funktionsweise der Brühvorrichtung verhindert. Wenn der Benutzer dann eine erhöhte Kraft aufwendet, um ein Schließen der Brühkammer trotz des Widerstands herbeizuführen, besteht zudem die Gefahr, dass die Brühkammer oder die Verschlussmechanik der Brühvorrichtung beschädigt wird.

Der Erfindung liegt daher die Aufgabe zu Grunde, eine Brühvorrichtung zum Extrahieren einer Portionskapsel bereitzustellen, welche die Nachteile des Standes der Technik nicht aufweist und ein gegenüber dem Stand der Technik vergleichsweise sicheres und fehlerfreies Schließen der Brühkammer ermöglicht.

Zudem ist aus der Druckschrift DE 10 2010 044 945 A1 eine Brühvorrichtung zum Extrahieren einer Portionskapsel bekannt, welche ein Beabstandungselement und Perforationsmittel aufweist, die an einem Brühkammerelement befestigt sind. Der Aufbau der Brühvorrichtung ist nachteiligerweise jedoch recht aufwändig.

### Offenbarung der Erfindung

Diese Aufgabe wird erfindungsgemäß durch eine Brühvorrichtung zum Extrahieren einer Portionskapsel mit einem ersten Brühkammerelement und einem zweiten Brühkammerelement gelöst, wobei das erste Brühkammerelement zwischen einer Ladestellung, in welcher das erste und das zweite Brühkammerelement zum Einführen der Portionskapsel voneinander beabstandet sind, und einer Extraktionsstellung, in welcher das erste und das zweite Brühkammerelement zur Bildung einer im Wesentlichen geschlossenen Brühkammer für die Portionskapsel einander angenähert sind, bewegbar ist, und wobei die Brühvorrichtung derart ausgebildet ist, dass die Ausrichtung der Portionskapsel beim Überführen von der Ladestellung in die Extraktionsstellung im Wesentlichen konstant bleibt.

Vorteilhafterweise wird somit ein Ausrichten der Portionskapsel beim Überführen von der Ladestellung in die Extraktionsstellung nicht benötigt, so dass die Gefahr einer Blockierung der Brühvorrichtung aufgrund einer fehlerhaften oder gänzlich ausgebliebenden Ausrichtung ausgeräumt wird. Insbesondere wird die Portionskapsel beim Überführen des ersten Brühkammerelements von der Ladestellung in die Extraktionsstellung lediglich in axialer Richtung translatorisch bewegt.

Gemäß der vorliegenden Erfindung ist vorgesehen, dass die Brühvorrichtung ein Abstandsmittel aufweist, welches zur Beabstandung der Portionskapsel vom ersten Brühkammerelement zumindest in der Ladestellung vorgesehen ist. In vorteilhafter Weise wird durch das Abstandsmittel verhindert, dass die Portionskapsel in der Ladestellung oder beim Überführen in Richtung der Extraktionsstellung verkippt. Die Portionskapsel wird durch das Abstandsmittel in Position gehalten, bis die Brühkammer geschlossen ist. Das Abstandsmittel weist hierfür ein in Richtung des zweiten Brühkammerelements federelastisch vorstehendes freies Ende auf. Das federelastisch vorstehende freie Ende dient dazu, ein Verrutschen eines Teils der Portionskapsel in Richtung des ersten Brühkammerelements zu verhindern, so dass die Portionskapsel nicht in Richtung des ersten Brühkammers verkippen kann. Die federelastische Ausbildung dient ferner dazu, die Lagetoleranzgrenzen der Kapsel zu verringern. Das Abstandsmittel ist insbesondere derart ausgebildet, dass ein unterer Bereich der Portionskapsel nicht in Richtung des ersten Brühkammerelements verrutschen kann.

Gemäß der vorliegenden Erfindung ist vorgesehen, dass das Abstandsmittel einstückig mit einer am ersten Brühkammerelement befestigten Grundplatte ausgebildet ist. Das Abstandsmittel ist somit vergleichsweise einfach am ersten Brühkammerelement zu montieren. Insbesondere weist die Grundplatte eine Montageöffnung, beispielsweise zur Durchführung einer Befestigungsschraube, auf. Das Abstandsmittel ist insbesondere als eine aus Metall gefertigte Biegefeder ausgebildet.

Gemäß einer bevorzugten Ausführungsform der vorliegenden Erfindung ist vorgesehen, dass die Grundplatte wenigstens eine in Richtung des zweiten Brühkammerelements vorstehende Perforationsspitze aufweist. In vorteilhafter Weise dient die Grundplatte sowohl zum Halten der Portionskapsel in einer gleichbleibenden Ausrichtung mittels des Abstandsmittels, als auch zur Perforation der Portionskapsel beim Schließen der Brühkammer.

Erfindungsgemäß ist vorgesehen, dass die Brühvorrichtung eine weitere Grundplatte aufweist, welche wenigstens eine in Richtung des zweiten Brühkammerelements vorstehende Perforationsspitze aufweist, wobei die Grundplatte vorzugsweise zwischen dem ersten Brühkammerelement und der weiteren Grundplatte angeordnet ist. In vorteilhafter Weise wird somit eine möglichst bauraumkompakte und stabile Anordnung der Perforationsmittel und des Abstandsmittels erzielt. Vorzugsweise weist sowohl die Grundplatte, als auch die weitere Grundplatte jeweils eine Befestigungsöffnung auf, welche sich in axialer Richtung überlappen, so dass die Grundplatte und die weitere Grundplatte mit einer gemeinsamen Befestigungsschraube am ersten Brühkammerelement befestigt werden können. Vorzugsweise weist die Grundplatte oder die weitere Grundplatte vier in Richtung des zweiten Brühkammerelements vorstehende Perforationsspitze auf, wobei zwei erste Perforationsspitzen in einer gemeinsamen Horizontalebene angeordnet sind und wobei zwei zweite Perforationsspitzen in einer gemeinsamen Vertikalebene angeordnet sind, wobei die Vertikalebene vorzugsweise mittig zwischen den zwei ersten Perforationsspitzen verläuft. In vorteilhafter Weise sind die zwei ersten Perforationsspitzen oberhalb der zweiten Perforationsspitzen angeordnet, so dass beim Einleiten der Extraktionsflüssigkeit die beiden ersten Perforationsspitzen zunächst als Entlüftungsöffnungen für die Portionskapsel fungieren können.

Gemäß einer bevorzugten Ausführungsform der vorliegenden Erfindung ist vorgesehen, dass die Grundplatte oder die weitere Grundplatte eine Zuführöffnung zum Einführen von Extraktionsflüssigkeit in die Brühkammer aufweist, wobei die Zuführöffnung vorzugsweise in der Vertikalebene angeordnet ist und/oder wobei die Zuführöffnung vorzugsweise zwischen den zwei zweiten Perforationsspitzen angeordnet ist und/oder wobei die Zuführöffnung eine an einem Randbereich der Grundplatte oder der weiteren Grundplatte ausgebildete halbseitige Aussparung umfasst. In vorteilhafter Weise wird in der Extraktionsstellung die Extraktionsflüssigkeit durch die Zuführöffnung in die Brühkamer eingeleitet. Dabei gelangt die Extraktionsflüssigkeit durch Öffnungen in einem Deckel der Portionskapsel, welche beim Schließen der Brühkammer durch die Perforationsspitzen erzeugt werden, in das Innere der Portionskapsel.

Gemäß der vorliegenden Erfindung ist vorgesehen, dass das erste Brühkammerelement ein unteres Haltemittel zum Halten eines unteren Randbereichs der Portionskapsel aufweist, wobei das Abstandsmittel zur Beabstandung der Portionskapsel von dem ersten Brühkammerelement im Bereich des Haltemittels ausgebildet ist, wobei vorzugsweise das freie Ende an einer dem Haltemittel zugewandten Seite des Grundplatte oder der weiteren Grundplatte angeordnet ist. In vorteilhafter Weise wird somit verhindert, dass der untere Randbereich der Portionskapsel auf dem Haltemittel in Richtung des ersten Brühkammerelements verrutscht und hierdurch eine Verkippung der Portionskapsel herbeigeführt wird. Alternativ ist vorgesehen, dass das Abstandsmittel in Form einer Rille, Sicke und/oder Vertiefung in der Auflagefläche des Haltemittels ausgebildet ist, um ein Verrutschen des Kapselflanschs auf dem Haltemittel in Richtung des ersten Brühkammerelements zu verhindern. Denkbar ist auch, dass das Haltemittel mit einer Antirutschbeschichtung als Abstandsmittel versehen ist.

Gemäß einer bevorzugten Ausführungsform der vorliegenden Erfindung ist vorgesehen, dass die Brühvorrichtung seitliche Haltearme mit dem ersten Brühkammerelement zugewandten Halteflächen umfasst, wobei das Abstandsmittel derart ausgebildet ist, dass in der Ladestellung das Abstandsmittel die Portionskapsel federelastisch gegen die Halteflächen drückt. Insbesondere wird ein Flansch der Portionskapsel gegen die Halteflächen gedrückt. Aufgrund der asymmetrischen Ausbildung der Portionskapsel neigt die Portionskapsel dazu, in Richtung des zweiten Brühkammerelements zu verkippen. Der untere Randbereich rutscht dann gegen das erste Brühkammerelement. Die Halteflächen und das Abstandsmittel sorgen nun dafür, dass in der Ladestellung bzw. beim Überführen von der Ladestellung in die Extraktionsstellung die Portionskapsel nicht in Richtung des zweiten Brühkammerelements verkippt, da der Flansch der Portionskapsel an den Halteflächen anliegt und das Abstandsmittel ein Verrutschen des unteren Bereichs der Portionskapsel in Richtung des ersten Brühkammerelements verhindert. Vorzugsweise ist das Abstandsmittel derart ausgebildet ist, dass sich das Abstandsmittel in der Extraktionsstellung an das erste Brühkammerelement anschmiegt, so dass der Extraktionsvorgang und die Dichtheit der Brühkammer in der Extraktionsstellung durch das Abstandsmittel nicht beeinträchtigt werden.

Es wird ferner ein Verfahren zum Betrieb einer insbesondere erfindungsgemäßen Brühvorrichtung offenbart, wobei in einem ersten Verfahrensschritt eine Portionskapsel zwischen das erste und das zweite Brühkammerelement eingeführt wird und wobei in einem nachfolgenden zweiten Verfahrensschritt das erste Brühkammerelement von der Ladestellung in die Extraktionsstellung bewegt wird, wobei die Ausrichtung der Portionskapsel während des zweiten Verfahrensschrittes konstant gehalten wird. In vorteilhafter Weise wird somit ein Anschlagen der Portionskapsel an Randbereiche des zweiten Brühkammerelements beim Schließen der Brühkammer verhindert. Vorzugsweise wird die Portionskapsel während des zweiten Verfahrensschrittes in einer vertikalen Ausrichtung gehalten, d.h. das die Haupterstreckungsebene eines Deckels der Portionskapsel im Wesentlichen parallel zum Schwerefeld bzw. der Vertikalebene und vorzugsweise senkrecht zur axialen Richtung ausgerichtet ist.

Gemäß einer bevorzugten Ausführungsform der vorliegenden Erfindung ist vorgesehen, dass am Anfang des zweiten Verfahrensschrittes die Portionskapsel mittels eines federelastischen Abstandsmittels vom ersten Brühkammerelement beabstandet wird und wobei am Ende des zweiten Verfahrensschrittes das Abstandsmittel durch die Portionskapsel gegen das erste Brühkammerelement gedrückt wird. Vorzugsweise wird während des zweiten Verfahrensschrittes das erste Brühkammerelement zunächst entlang einer axialen Richtung linear verschoben und anschließend zusätzlich um eine zur axialen Richtung senkrechte Schwenkachse verschwenkt wird. Die Ausrichtung der Portionskapsel bleibt auch während des Verschwenkens des ersten Brühkammerelements konstant. Hierbei wird das Abstandsmittel federelastisch gegen das erste Brühkammerelement ausgelenkt, damit die Portionskapsel nicht verkippt. Eine Verschwenkung des ersten Brühkammerelements erst kurz vor dem Schließen der Brühkammer hat den Vorteil, dass die Perforationsspitzen nicht schon in der Ladestellung mit der Portionskapsel in Kontakt kommen. Auf diese Weise wird verhindert, dass die Portionskapsel beim Einführen derselben an den Perforationsspitzen hängen bleibt.

Die Erfindung wird nachfolgend anhand von in Zeichnungen dargestellten Ausführungsbeispielen näher erläutert. Die Zeichnungen illustrieren lediglich beispielhafte Ausführungsformen der Erfindung, welche den wesentlichen Erfindungsgedanken nicht einschränken.

### Kurze Beschreibung der Figuren

- **Figuren 1 und 2**: zeigen schematische Schnittbildansichten einer Brühvorrichtung gemäß einer beispielhaften Ausführungsform der vorliegenden Erfindung.
- **Figuren 3 bis 6**: zeigen schematische Detailansichten eines ersten Brühkammerelements der Brühvorrichtung gemäß der beispielhaften Ausführungsform der Erfindung.
- **Figur 7**: zeigt eine schematische Detailansicht eines Abstandsmittels der Brühvorrichtung gemäß der beispielhaften Ausführungsform der Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

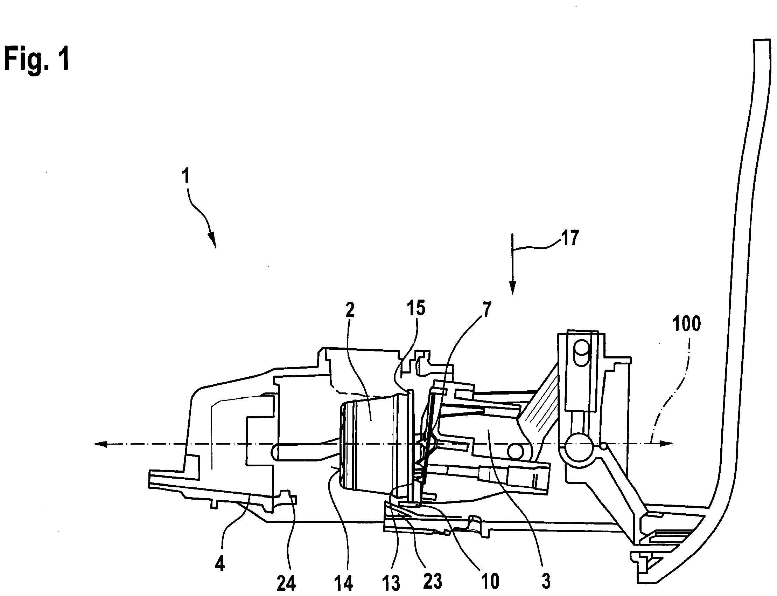

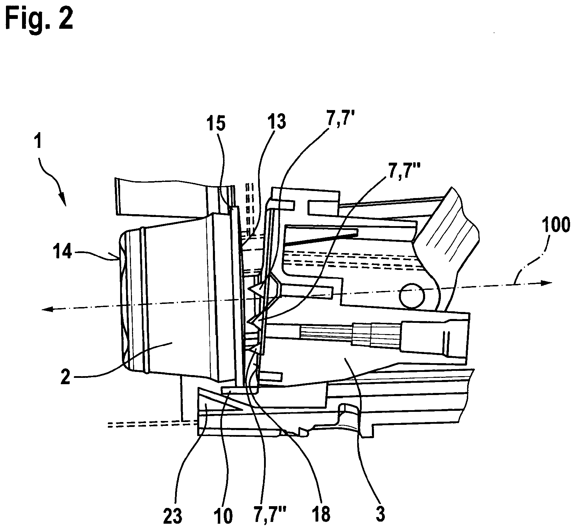

In Figuren 1 und 2 sind schematische Schnittbildansichten einer Brühvorrichtung 1 zum Extrahieren einer Portionskapsel 2 gemäß einer beispielhaften Ausführungsform der vorliegenden Erfindung dargestellt. Die Brühvorrichtung 1 umfasst dabei ein als Aufnahmeelement bzw. teilweise hohles Glockenelement ausgebildetes zweites Brühkammerelement 4 und ein als Verschlusselement bzw. Kolben ausgebildetes erstes Brühkammerelement 3. Das erste Brühkammerelement 3 ist relativ zum zweiten Brühkammerelement 4 entlang einer axialen Richtung 100 zwischen einer in Figur 1 illustrierten Ladestellung, in welcher die Portionskapsel 2 zum Befüllen der Brühvorrichtung 1 zwischen das erste und das zweite Brühkammerelement 3, 4 eingeführt werden kann, und einer Extraktionsstellung (nicht dargestellt), in welcher das erste und das zweite Brühkammerelement 3, 4 einander angenähert sind und eine geschlossene Brühkammer zur Extraktion der in der Portionskapsel 2 befindlichen Getränkesubstanzen, bewegbar.

Die Portionskapsel 2 umfasst einen aus Kunststoff gefertigten und topfförmig ausgebildeten Kegelstumpf. Der Kegelstumpf wird mittels eines aus Kunststoff- oder Aluminiumfolie gefertigten Kapseldeckels 13 luftdicht verschlossen. Innerhalb der Portionskapsel 2 befindet sich eine Getränkesubstanz, insbesondere ein mittels einer Extrahierflüssigkeit extrahierbares Röstkaffeepulver oder ein Instant- oder Tee-Getränkegranulat. Optional weist die Portionskapsel 2 ein nicht abgebildetes Filterelement auf, welches von einem Kapselboden 14 der Portionskapsel 2 beabstandet ist und zwischen dem Kapselboden 14 und der Getränkesubstanz angeordnet ist. Der Kapseldeckel 13 ist im Bereich eines Kapselflansches 15 mit dem Kegelstumpf verklebt oder verschweißt.

Das erste Brühkammerelement 3 weist auf einer dem zweiten Brühkammerelement 4 zugewandten Endfläche 18 eine weitere Grundplatte 9 auf, welche vier Perforationsspitzen 7 umfasst. Die vier Perforationsspitzen 7 stehen in Richtung des zweiten Brühkammerelements 4 von der weiteren Grundplatte 9 ab. Zwei erste Perforationsspitzen 7' der vier Perforationsspitzen 7 sind in einer gemeinsamen Horizontalebene 101 angeordnet sind, während zwei zweite Perforationsspitzen 7" der vier Perforationsspitzen 7 in einer gemeinsamen Vertikalebene 102 angeordnet sind. Die Vertikalebene 102 verläuft insbesondere parallel zum Schwerefeld der Erde und mittig zwischen den zwei ersten Perforationsspitzen 7'. Die zwei zweiten Perforationsspitzen 7" sind unterhalb der Horizontalebene 101 angeordnet. Die weitere Grundplatte 9 weist eine halbseitige Aussparung als Zuführöffnung 8 auf, welche entlang der Vertikalebene 102 zwischen den zwei zweiten Perforationsspitzen 7" angeordnet ist. Die Zuführöffnung 8 ist entlang der axialen Richtung 100 deckungsgleich mit einem am ersten Brühkammerelement 3 ausgebildeten Wasseraustritt 16 ausgebildet, so dass in der Extraktionsstellen die Extraktionsflüssigkeit, insbesondere heißes Wasser, durch den Wasseraustritt 16 und die Zuführöffnung 8 in die Brühkammer eingeleitet werden kann. Beim Schließen der Brühkammer wird der Kapseldeckel 13 durch die Perforationsspitzen 7 perforiert, so dass die eingeleitete Extraktionsflüssigkeit in das Innere der Portionskapsel 2 gelangt und mit der Getränkesubstanz wechselwirkt.

Das erste Brühkammerelement 3 weist ferner an seiner Unterseite ein starr und insbesondere einstückig mit dem ersten Brühkammerelement 3 verbundenes unteres Haltemittel 10 auf, auf welchem in der Ladestellung und beim Überführen des ersten Brühkammerelements 2 von der Ladestellung in die Extraktionsstellung der nach unten gerichtete Bereich des Kapselflansches 15 aufliegt. In der Extraktionsstellung ist das Haltemittel 10 unterhalb der Brühkammer und unterhalb des zweiten Brühkammerelements 4 angeordnet. Ferner weist das erste Brühkammerelement 3 zwei seitliche Haltearme 11 auf, deren freien Enden einander zugewandt sind und jeweils eine zum ersten Brühkammerelement 3 zugewandte Haltefläche 12 aufweisen. Die Haltearme 11 sind dazu vorgesehen, den Kapselflansch 15 in der Ladestellung und beim Überführen des ersten Brühkammerelements 2 von der Ladestellung in die Extraktionsstellung seitlich zu umfassen, damit die Portionskapsel 2 nicht in Richtung des zweiten Brühkammerelements 4 verkippt.

Das zweite Brühkammerelement 4 weist ein zweites Perforationsmittel auf, welches eine in Richtung des ersten Brühkammerelements 3 weisende Aufstechspitze umfasst, die innerhalb des Hohlraums angeordnet ist und vorzugsweise über einen Rastverschluss lösbar mit dem zweiten Brühkammerelement 4 verbunden ist. Die Aufstechspitze ist mit seitlichen Nuten versehen, welche sich parallel zur axialen Richtung 100 erstrecken. Vorzugsweise wird der Kapselboden 14 beim Schließen der Brühkammer oder durch den Druckaufbau im Inneren der Portionskapsel 2 durch die Aufstechspitze perforiert, so dass das in der Extraktionsstellung durch die Wechselwirkung zwischen der Extraktionsflüssigkeit und der Getränkesubstanz erzeugte Getränk zu einer Getränkeabgabestelle abfließen kann.

In Figur 1 ist das erste Brühkammerelement 3 in der Ladestellung illustriert, d.h. das erste Brühkammerelement 3 ist entlang der axialen Richtung 100 von dem zweiten Brühkammerelement 4 beabstandet. In dieser Ausgangsposition wird nun entlang einer vertikalen Laderichtung 17 die Portionskapsel 2 durch einen nicht abgebildeten Benutzer in einen Zwischenbereich zwischen das erste und das zweite Brühkammerelement 3, 4 eingeführt. Ein als Teil des zweiten Brühkammerelements 4 ausgebildetes Gehäuse der Brühvorrichtung 1 weist dazu eine Zuführöffnung auf, durch welche die Portionskapsel 2 eingeführt wird. Das erste Brühkammerelement 3 ist dabei derart gegenüber dem zweiten Brühkammerelement 4 verkippt, dass die Endfläche 8 gegenüber der Laderichtung 17 geneigt ist. Durch diese Neigung ist der der Zuführöffnung zugewandte Bereich des ersten Brühkammerelements 3 am weitesten von dem zweiten Brühkammerelement 4 entfernt, so dass die Portionskapsel 2 in den Zwischenbereich einführbar ist, ohne dass dabei ein Verhaken der Portionskapsel 2 mit den Perforationsspitzen 7 droht.

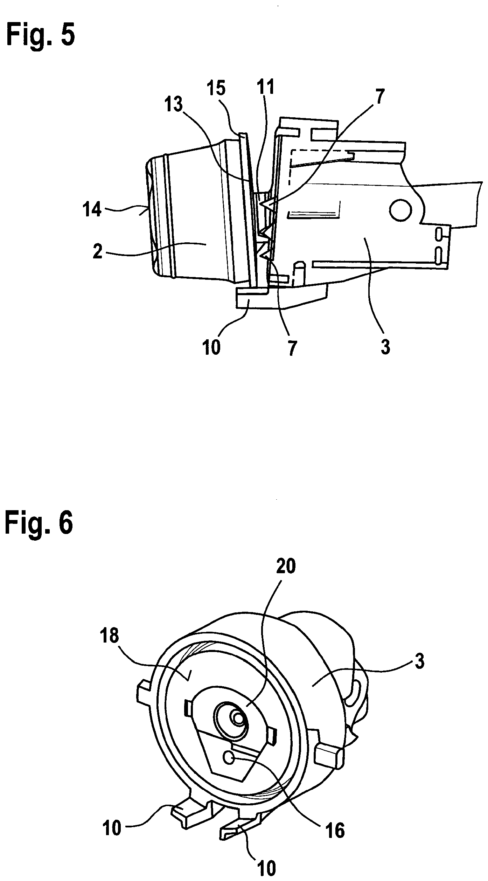

In Figuren 2 und 5 ist anschaulich illustriert, dass die Portionskapsel 2 unter Schwerkrafteinwirkung seitlich in den Bereich zwischen dem ersten und dem zweiten Brühkammerelement 3, 4 fällt und dort auf dem Haltemittel 10 aufliegt. Gleichzeitig wird durch die seitlichen Haltearme 11 ein Kippen der Portionskapsel 2 in Richtung des zweiten Brühkammerelements 4 verhindert, indem der Kapselflansch 15 in Richtung des zweiten Brühkammerelements 4 an den Halteflächen 12 abgestützt wird, so dass die Portionskapsel 2 im Wesentlichen axial entlang der axialen Richtung 100 ausgerichtet ist. Der Kapseldeckel 13, sowie der Kapselboden 14 sind folglich im Wesentlichen parallel zur Laderichtung 17 bzw. dem Schwerefeld und senkrecht zur axialen Richtung 100 ausgerichtet. Durch das starke Asymmetrie der Portionskapsel 2 (das größte Gewicht der Portionskapsel 2 zeigt freihängend in Richtung des zweiten Brühkammerelements 4 wirkt ein Drehmoment auf die Portionskapsel 2. Dieses Drehmoment kann dazu führen, dass der untere Bereich der Portionskapsel 2 bzw. des Kapselflansches 10 auf dem Haltemittel 10 in Richtung des ersten Brühkammerelements 10 verrutscht. Die Portionskapsel 2 würde dann trotz der Fixierung des Flansches im oberen Bereich der Portionskapsel 2 durch die seitlichen Haltearme 11 in Richtung des zweiten Brühkammerelements 4 verkippen. Wenn anschließend ein Benutzer versuchen würde, die Brühkammer zu schließen, würde die Portionskapsel 2 mit ihrem Kapselboden 14 möglicherweise gegen einen unteren Randbereich 24 des zweiten Brühkammerelements 4 anstoßen und somit ein Schließen der Brühkammer blockieren. Damit der untere Bereich der Portionskapsel 2 nicht in Richtung des ersten Brühkammerelements 3 verrutscht, weist die Brühvorrichtung 1 ein Abstandsmittel 5 auf, welches den unteren Bereich der Portionskapsel 2 vom ersten Brühkammerelement 3 beabstandet. Hierdurch verbleibt die Portionskapsel 2 in einer axial entlang der axialen Richtung 100 ausgerichteten Ausrichtung. Sowohl in der Ladestellung, als beim Überführen des ersten Brühkammerelements 3 von der Ladestellung in die Extraktionsstellung bleibt die Ausrichtung der Portionskapsel 2 konstant. Die Portionskapsel 2 verbleibt insbesondere axial entlang der axialen Richtung 100 ausgerichtet, so dass ein gefahrloses Einführen der Portionskapsel 2 in den Hohlraum beim Schließen der Brühkammer stets sichergestellt werden kann.

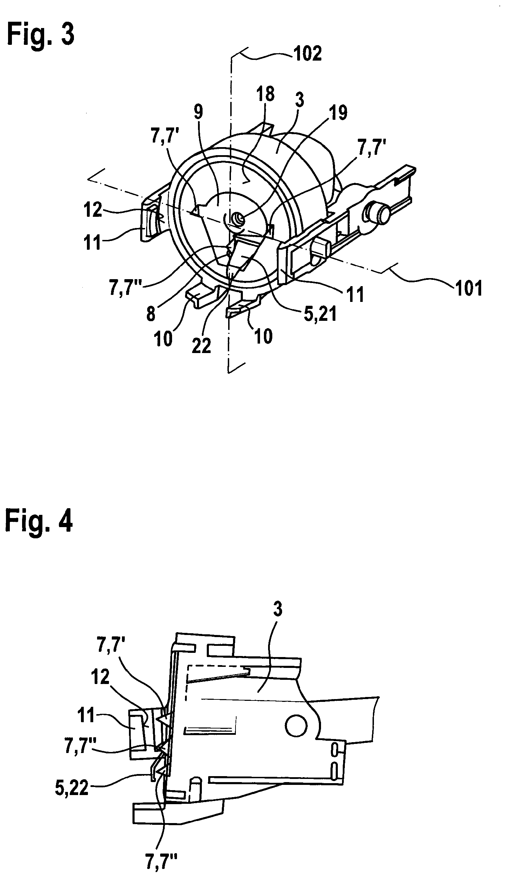

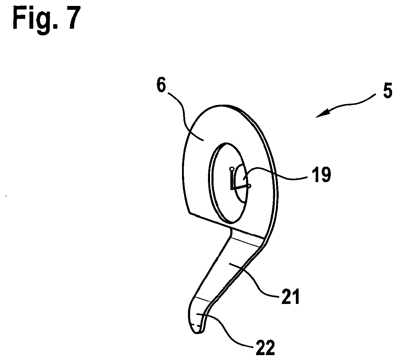

Im vorliegenden Beispiel umfasst das Abstandsmittel 5 - wie in Figuren 3, 4, 5 und 7 illustriert ist - eine Metall-Biegefeder 21, welche über eine Grundplatte 6 am ersten Brühkammerelement 3 befestigt ist und ein im unteren Bereich der Portionskapsel 2 in Richtung des zweiten Brühkammerelements 4 vorstehendes freies Ende 22 aufweist, welches in der Extraktionsstellung federelastisch an die Endfläche 18 des ersten Brühkammerelements 3 bewegt werden kann. Die freie Ende 22 drückt den unteren Bereich der Portionskapsel 2 in Richtung des zweiten Brühkammerelements 4, so dass ein Verrutschen in Richtung des ersten Brühkammerelements 3 verhindert wird. Die Grundplatte 6 ist vorzugsweise zwischen der weiteren Grundplatte 9 und dem ersten Brühkammerelement 3 angeordnet, wobei die Grundplatte 6 und die weitere Grundplatte 9 miteinander fluchtende Befestigungsöffnungen 19 aufweisen, durch welche eine gemeinsame Befestigungsschraube zur Befestigung der Grundplatte 6 und der weiteren Grundplatte 9 am ersten Brühkammerelement 3 führbar sind. In der Endfläche 18 ist vorzugsweise eine Vertiefung 20 in Form der Außenkontur der Grundplatte 6 und der weiteren Grundplatte 9 eingebracht, so dass die weitere Grundplatte 9 und die Grundplatte 6 in die Vertiefung eingesetzt sind und die weitere Grundplatte 9 bündig mit der übrigen Endfläche 18 abschließt.

Alternativ ist vorgesehen, dass das Abstandsmittel 5 in Form einer Rille, Sicke und/oder Vertiefung in der nach oben weisenden Auflagefläche des Haltemittels 10 für den Kapselflansch 15 ausgebildet ist, um ein Verrutschen des Kapselflanschs 15 auf dem Haltemittel 10 in Richtung des ersten Brühkammerelements 3 zu verhindern. Denkbar ist auch, dass das Haltemittel 10 mit einer Antirutschbeschichtung als Abstandsmittel 5 versehen ist.

Durch die Neigung des ersten Brühkammerelements 3 wird in der Ladestellung ein Kontakt zwischen den Perforationsspitzen 7 und dem Kapseldeckel 13 ferner weitgehend vermieden. Das Haltemittel 10 weist optional auf seinem freien äußeren Ende eine Kante auf, welche ein ungewolltes Abrutschen des Kapselflansches 15 vom Haltemittel 10, d.h. in Richtung des zweiten Brühkammerelements 4 verhindert.

Beim Schließen der Brühkammer verbleibt die Portionskapsel 1 in der axialen Ausrichtung, wobei am Ende der Schließbewegung das erste Brühkammerelement 3 ebenfalls in eine axiale Ausrichtung verschwenkt wird. Der Kapselflansch 5 liegt dabei jedoch schon rundherum am Randbereich 24 des zweiten Brühkammerelements 4 an, so dass hierdurch die axiale Ausrichtung der Portionskapsel 2 nicht verändert wird. Das Abstandsmittel 5 schmiegt sich lediglich an das erste Brühkammerelement 3 federelastisch an und die Brühkammer wird hermetisch geschlossen, um den Extraktionsvorgang einzuleiten. Nach Abschluss des Extraktionsvorgangs wird das erste Brühkammerelement 3 zurück in die in Figur 1 gezeigte Ladestellung verfahren, wobei die verbrauchte Portionskapsel 2 während der Rückwärtsbewegung des ersten Brühkammerelements 3 mittels eines Auswerfers 23 von dem Haltemittel 10 geschoben wird und nach unten ausfällt.

### Bezugszeichenliste

- 1: Brühvorrichtung
- 2: Portionskapsel
- 3: Erstes Brühkammerelement
- 4: Zweites Brühkammerelement
- 5: Abstandsmittel
- 6: Grundplatte
- 7: Perforationsspitzen
- 8: Zuführöffnung
- 9: Weitere Grundplatte
- 10: Haltemittel
- 11: Haltearme
- 12: Haltefläche
- 13: Kapseldeckel
- 14: Kapselboden
- 15: Kapselflansch
- 16: Wasseraustritt
- 17: Laderichtung
- 18: Endfläche
- 19: Befestigungsöffnung
- 20: Vertiefung
- 21: Biegefeder
- 22: freies Ende
- 23: Auswerfers
- 24: Randbereich
- 100: Axiale Richtung
- 101: Horizontalebene
- 102: Vertikalebene

## Patentansprüche

1. Brühvorrichtung (1) zum Extrahieren einer Portionskapsel (2) mit einem ersten Brühkammerelement (3) und einem zweiten Brühkammerelement (4), wobei das erste Brühkammerelement (3) zwischen einer Ladestellung, in welcher das erste und das zweite Brühkammerelement (3, 4) zum Einführen der Portionskapsel (2) voneinander beabstandet sind, und einer Extraktionsstellung, in welcher das erste und das zweite Brühkammerelement (3, 4) zur Bildung einer im Wesentlichen geschlossenen Brühkammer für die Portionskapsel (2) einander angenähert sind, bewegbar ist, wobei die Brühvorrichtung (1) derart ausgebildet ist, dass die Ausrichtung der Portionskapsel (2) beim Überführen von der Ladestellung in die Extraktionsstellung im Wesentlichen konstant bleibt, wobei die Brühvorrichtung (1) ein Abstandsmittel (5) aufweist, welches zur Beabstandung der Portionskapsel (2) vom ersten Brühkammerelement (3) zumindest in der Ladestellung vorgesehen ist, wobei das Abstandsmittel (5) ein in Richtung des zweiten Brühkammerelements (4) federelastisch vorstehendes freies Ende (22) aufweist, wobei das erste Brühkammerelement (3) ein unteres Haltemittel (10) zum Halten eines unteren Randbereichs der Portionskapsel (2) aufweist und wobei das Abstandsmittel (5) zur Beabstandung der Portionskapsel (2) von dem ersten Brühkammerelement (3) im Bereich des Haltemittels (10) ausgebildet ist, **dadurch gekennzeichnet, dass** das Abstandsmittel (5) einstückig mit einer am ersten Brühkammerelement (3) befestigten Grundplatte (6) ausgebildet ist, wobei die Brühvorrichtung (1) eine weitere Grundplatte (9) aufweist, welche wenigstens eine in Richtung des zweiten Brühkammerelements (4) vorstehende Perforationsspitze (7) aufweist und wobei die Grundplatte (6) zwischen dem ersten Brühkammerelement (3) und der weiteren Grundplatte (9) angeordnet ist.

2. Brühvorrichtung (1) nach Anspruch 1, wobei die Grundplatte (6) oder die weitere Grundplatte (9) vier in Richtung des zweiten Brühkammerelements (4) vorstehende Perforationsspitze (7) aufweist, wobei zwei erste Perforationsspitzen (7') in einer gemeinsamen Horizontalebene (101) angeordnet sind und wobei zwei zweite Perforationsspitzen (7") in einer gemeinsamen Vertikalebene (102) angeordnet sind, wobei die Vertikalebene (102) vorzugsweise mittig zwischen den zwei ersten Perforationsspitzen (7') verläuft.

3. Brühvorrichtung (1) nach einem der vorhergehenden Ansprüche, wobei die Grundplatte (6) oder die weitere Grundplatte (9) eine Zuführöffnung (8) zum Einführen von Extraktionsflüssigkeit in die Brühkammer aufweist, wobei die Zuführöffnung (8) vorzugsweise in der Vertikalebene (102) angeordnet ist und/oder wobei die Zuführöffnung (8) vorzugsweise zwischen den zwei zweiten Perforationsspitzen (7") angeordnet ist und/oder wobei die Zuführöffnung (8) eine an einem Randbereich der Grundplatte (6) oder der weiteren Grundplatte (9) ausgebildete halbseitige Aussparung umfasst.

4. Brühvorrichtung (1) nach einem der vorhergehenden Ansprüche, wobei das freie Ende (22) an einer dem Haltemittel (10) zugewandten Seite der Grundplatte (6) oder der weiteren Grundplatte (9) angeordnet ist.

5. Brühvorrichtung (1) nach einem der Ansprüche 1 bis 4, wobei die Brühvorrichtung (1) seitliche Haltearme (11) mit dem ersten Brühkammerelement (3) zugewandten Halteflächen (12) umfasst, wobei das Abstandsmittel (5) derart ausgebildet ist, dass in der Ladestellung das Abstandsmittel (5) die Portionskapsel (2) federelastisch gegen die Halteflächen (12) drückt.

6. Brühvorrichtung (1) nach einem der Ansprüche 1 bis 5, wobei das Abstandsmittel (5) derart ausgebildet ist, dass sich das Abstandsmittel (5) in der Extraktionsstellung an das erste Brühkammerelement (3) anschmiegt.

## Claims

1. Brewing device (1) for extracting from a portion capsule (2), having a first brewing chamber element (3) and a second brewing chamber element (4), wherein the first brewing chamber element (3) is movable between a loading position, in which the first and the second brewing chamber element (3, 4) are spaced apart from one another in order to introduce the portion capsule (2), and an extraction position, in which the first and the second brewing chamber element (3, 4) have been moved together in order to form a substantially closed brewing chamber for the portion capsule (2), wherein the brewing device (1) is configured such that the orientation of the portion capsule (2) remains substantially constant during transfer from the loading position into the extraction position, wherein the brewing device (1) has a spacer (5) which is provided to space apart the portion capsule (2) from the first brewing chamber element (3) at least in the loading position, wherein the spacer (5) has a free end (22) that projects in a spring-elastic manner in the direction of the second brewing chamber element (4), wherein the first brewing chamber element (3) has a lower retaining means (10) for retaining a lower peripheral region of the portion capsule (2), and wherein the spacer (5) is configured to space apart the portion capsule (2) from the first brewing chamber element (3) in the region of the retaining means (10), **characterized in that** the spacer (5) is formed integrally with a base plate (6) fastened to the first brewing chamber element (3), wherein the brewing device (1) has a further base plate (9), which has at least one perforation spike (7) that projects in the direction of the second brewing chamber element (4), and wherein the base plate (6) is arranged between the first brewing chamber element (3) and the further base plate (9).

2. Brewing device (1) according to Claim 1, wherein the base plate (6) or the further base plate (9) has four perforation spikes (7) that project in the direction of the second brewing chamber element (4), wherein two first perforation spikes (7') are arranged in a common horizontal plane (101), and wherein two second perforation spikes (7") are arranged in a common vertical plane (102), wherein the vertical plane (102) extends preferably centrally between the two first perforation spikes (7').

3. Brewing device (1) according to either of the preceding claims, wherein the base plate (6) or the further base plate (9) has a feed opening (8) for introducing extraction liquid into the brewing chamber, wherein the feed opening (8) is arranged preferably in the vertical plane (102), and/or wherein the feed opening (8) is arranged preferably between the two second perforation spikes (7"), and/or wherein the feed opening (8) comprises a half-side cutout formed in a peripheral region of the base plate (6) or of the further base plate (9).

4. Brewing device (1) according to one of the preceding claims, wherein the free end (22) is arranged on a side, facing the retaining means (10), of the base plate (6) or of the further base plate (9).

5. Brewing device (1) according to one of Claims 1 to 4, wherein the brewing device (1) comprises lateral retaining arms (11) having retaining surfaces (12) facing the first brewing chamber element (3), wherein the spacer (5) is configured such that, in the loading position, the spacer (5) presses the portion capsule (2) in a spring-elastic manner against the retaining surfaces (12).

6. Brewing device (1) according to one of Claims 1 to 5, wherein the spacer (5) is configured such that the spacer (5) conforms to the first brewing chamber element (3) in the extraction position.

## Revendications

1. Dispositif d'infusion (1) pour l'infusion d'une capsule de dosage (2) avec un premier élément de chambre d'infusion (3) et un deuxième élément de chambre d'infusion (4), dans lequel le premier élément de chambre d'infusion (3) est déplaçable entre une position de chargement, dans laquelle les premier et deuxième éléments de chambre d'infusion (3, 4) sont espacés l'un de l'autre pour l'insertion de la capsule de dosage (2), et une position d'infusion, dans laquelle les premier et deuxième éléments de chambre d'infusion (3, 4) sont rapprochés l'un de l'autre pour la formation d'une chambre d'infusion essentiellement fermée pour la capsule de dosage (2), dans lequel le dispositif d'infusion (1) est réalisé de telle manière que l'orientation de la capsule de dosage (2) reste essentiellement constante lors du passage de la position de chargement à la position d'infusion, dans lequel le dispositif d'infusion (1) présente un moyen d'écartement (5), qui est prévu pour l'écartement de la capsule de dosage (2) du premier élément de chambre d'infusion (3) au moins dans la position de chargement, dans lequel le moyen d'écartement (5) présente une extrémité libre (22) saillante avec l'élasticité d'un ressort en direction du deuxième élément de chambre d'infusion (4), dans lequel le premier élément de chambre d'infusion (3) présente un moyen de maintien inférieur (10) pour maintenir une région de bord inférieure de la capsule de dosage (2) et dans lequel le moyen d'écartement (5) est réalisé en vue de l'écartement de la capsule de dosage (2) du premier élément de chambre d'infusion dans la région du moyen de maintien (10), **caractérisé en ce que** le moyen d'écartement (5) est réalisé d'une seule pièce avec une plaque de base (6) fixée sur le premier élément de chambre d'infusion (3), dans lequel le dispositif d'infusion (1) présente une autre plaque de base (9), qui présente au moins une pointe de perforation (7) saillante en direction du deuxième élément de chambre d'infusion (4) et dans lequel la plaque de base (6) est disposée entre le premier élément de chambre d'infusion (3) et l'autre plaque de base (9).

2. Dispositif d'infusion (1) selon la revendication 1, dans lequel la plaque de base (6) ou l'autre plaque de base (9) présente quatre pointes de perforation (7) saillantes en direction du deuxième élément de chambre d'infusion (4), dans lequel deux premières pointes de perforation (7') sont disposées dans un plan horizontal commun (101) et dans lequel deux deuxièmes pointes de perforation (7") sont disposées dans un plan vertical commun (102), dans lequel le plan vertical (102) s'étend de préférence au milieu entre les deux premières pointes de perforation (7').

3. Dispositif d'infusion (1) selon l'une quelconque des revendications précédentes, dans lequel la plaque de base (6) ou l'autre plaque de base (9) présente une ouverture d'alimentation (8) pour l'introduction de liquide d'infusion dans la chambre d'infusion, dans lequel l'ouverture d'alimentation (8) est disposée de préférence dans le plan vertical (102) et/ou dans lequel l'ouverture d'alimentation (8) est disposée de préférence entre les deux deuxièmes pointes de perforation (7") et/ou dans lequel l'ouverture d'alimentation (8) entoure sur la moitié du pourtour une découpe formée dans une région de bord de la plaque de base (6) ou de l'autre plaque de base (9).

4. Dispositif d'infusion (1) selon l'une quelconque des revendications précédentes, dans lequel l'extrémité libre (22) est disposée sur un côté de la plaque de base (6) ou de l'autre plaque de base (9) tourné vers le moyen de maintien (10).

5. Dispositif d'infusion (1) selon l'une quelconque des revendications 1 à 4, dans lequel le dispositif d'infusion (1) comprend des bras de maintien latéraux (11) avec des faces de maintien (12) tournées vers le premier élément de chambre d'infusion (3), dans lequel le moyen d'écartement (5) est réalisé de telle manière que dans la position de chargement le moyen d'écartement (5) pousse la capsule de dosage (2) avec l'élasticité d'un ressort contre les faces de maintien (12).

6. Dispositif d'infusion (1) selon l'une quelconque des revendications 1 à 5, dans lequel le moyen d'écartement (5) est réalisé de telle manière que le moyen d'écartement (5) épouse le premier élément de chambre d'infusion (3) dans la position d'infusion.
